# EUROPEAN PATENT SPECIFICATION

(11) **EP 2 426 754 B1**
(45) Date of publication and mention of the grant of the patent: **23.01.2013**
(21) Application number: 10015139.8
(22) Date of filing: 30.11.2010
(51) Int. Cl.: H01M 2/10

(54) **Reverse use battery pack design**
Batteriepackdesign mit umgekehrter Nutzung
Design de bloc batterie à utilisation inversée

(30) Priority: 06.08.2010 TW 099126279
(43) Date of publication of application: 07.03.2012
(73) Proprietor: HTC Corporation, Taoyuan County 330 (TW)
(72) Inventor: Hu, Chih-Kai, Taoyuan City Taoyuan County 330 (TW); Chen, Chien-Hung, Taoyuan City Taoyuan County 330 (TW); Liu, Ta-Wei, Taoyuan City Taoyuan County 330 (TW)
(74) Representative: Klang, Alexander H.

(56) References cited:
- EP-A2- 1 921 693
- US-A1- 2009 130 493

## Description

The present invention relates to a battery pack system.

Conventional handheld devices are commonly equipped with replaceable rechargeable batteries. Since each handheld device has a unique battery slot design for its battery, the battery slot of one handheld device needs to be matched with the battery in its shape and corresponding structures. In other words, a conventional battery pack can only be applied for one corresponding battery slot of a handheld device, which accordingly, causes immense increase of cost of design and manufacturing of the batteries.

This is mind, the present invention aims at providing a battery pack system that has a battery pack which can be used in two distinct battery slots of devices.

This is achieved by a battery pack system according to claim 1. The dependent claims pertain to corresponding further developments and improvements.

As will be seen more clearly from the detailed description following below, the claimed battery pack system includes a battery pack having two different coupling sections disposed at opposite sides of the battery pack so as to couple with corresponding coupling sections of a first battery slot in a specific direction, and with corresponding coupling sections of a second battery slot in a reverse direction.

In the following, the invention is further illustrated by way of example, taking reference to the accompanying drawings. Thereof
FIG. 1 is a schematic diagram of a battery pack and a battery slot of a battery pack system according to a first embodiment of the present invention,
FIG. 2 and FIG. 3 are partial diagrams in another view of the battery slot of the battery pack system according to the first embodiment,
FIG. 4 is a schematic diagram of a battery pack and a battery slot of a battery pack system according to a second embodiment of the present invention,
FIG. 5 and FIG. 6 are partial diagrams in another view of the battery slots of the battery pack system according to the second embodiment,
FIG. 7 is a schematic diagram of a battery pack and a battery slot of a battery pack system according to a third embodiment of the present invention, and
FIG. 8 and FIG. 9 are partial diagrams in another view of the battery slot of the battery pack system according to the third embodiment.

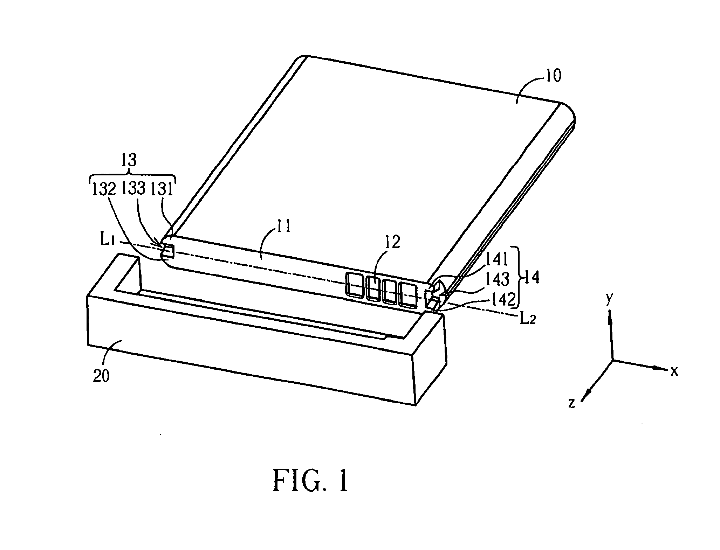

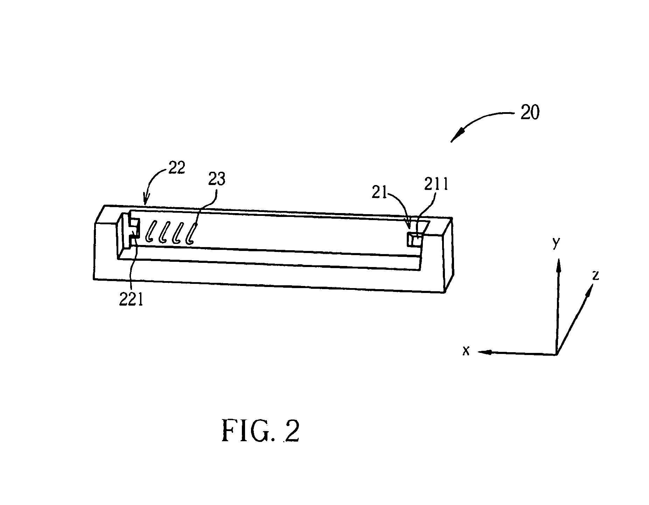

Please refer to FIG. 1 and FIG. 2. FIG. 1 is a schematic diagram of a battery pack 10 and a first battery slot 20 of a handheld device comprised in the battery pack system according to a first embodiment of the present invention. FIG. 2 is a partial diagram in another view of the first battery slot 20 of the battery pack system according to the first embodiment. The handheld device can be, but is not limited to, a foldable type, a clamshell type, a bar type, a slide type, a tablet type, or other types of cell phone, smart phone, personal digital assistant, navigator device, notebook computer, tablet computer, mobile processing device, mobile communications device, and so on. For simplicity, the drawings of the subject application only show the partial diagrams related to the battery slot 20 and the battery pack 10 of the battery pack system, and other parts of the handheld device will be omitted herein.

The battery pack 10 is installed in the first battery slot 20 of the handheld device in a detachable and replaceable manner for providing power for the handheld device. The battery pack 10 can be, but not limited to, a chargeable battery such as a Ni-MH, a Li-ion battery, and so on. The battery pack 10 is installed in the first battery slot 20 along a direction of z-axis as shown in FIG. 1. The battery pack 10 has a side surface 11, where a plurality of electrical contacts 12 are disposed, along an installing direction of the battery pack 10, and a plurality of pogo pins 23 are disposed on the first battery slot 20 at a corresponding position. When the battery pack 10 is installed in the first battery slot 20 along the direction of z-axis, the electrical contacts 12 couple to the pogo pins 23 respectively so as to be electrically connected and provide power.

Since the battery pack 10 varies depending on different handheld devices some engaging structure between the battery pack 10 and the first battery slot 20 allows the battery pack 10 to be installed in the handheld device only in a specific manner. Furthermore, the engaging structure also prevents the battery pack 10 from dropping out along a direction of y-axis when the battery pack 10 is installed in the first battery slot 20.

Please refer to FIG. 2. The first battery slot 20 includes a first coupling section 21 and a second coupling section 22 located respectively on both sides of a surface that is contacted by the side surface 11 of the battery pack 10. The battery pack 10 includes a corresponding third coupling section 13 and a corresponding fourth coupling section 14, located on the side surface 11 of the battery pack 10 respectively. In the first embodiment, the first coupling section 21 includes a protrusion 21 having a first contour (a rectangular contour is illustrated in the first embodiment, but the contour can also be polygon-shaped or arc-shaped), and the corresponding third coupling section 13 of the battery pack 10 includes a first arm 1 31, a second arm 132, and a recess 133. The recess 1 33 has a third contour corresponding to the first contour, and the first arm 131, the recess 133, and the second arm 132 are arranged in sequence along the direction of y-axis. In other words, the recess 133 is formed between the first arm 1 31 and the second arm 132. Due to the third contour of the third coupling section 13, when the battery pack 10 is installed in the first battery slot 20 along the direction of z-axis, the protrusion 211 of the first coupling section 21 reaches into the recess 133 such that the first coupling section 21 engages with the third coupling section 13. Meanwhile, the first arm 131 and the second arm 132 of the third coupling section 13 abut against both sides of the protrusion 211 of the first coupling section 21 along the direction of y-axis so as to restrain the movement of the battery pack 10 along the direction of y-axis with regard to the first battery slot 20. In other words, the battery pack 10 will not drop out of the first battery slot 20 along the direction of y-axis.

Similarly, in the first embodiment, the second coupling section 22 includes a protrusion 221, which has a second contour (a T-shaped contour, but not limited to, is illustrated in the first embodiment, the contour can also be polygon-shaped or arc-shaped), and the corresponding fourth coupling section 14 of the battery pack 10 includes a first arm 141, a second arm 142, and a recess 143. The recess 143 has a fourth contour corresponding to the second contour, and the first arm 141, the recess 143, and the second arm 142 are arranged in sequence along the direction of y-axis. In other words, the recess 143 is formed between the first arm 141 and the second arm 142. Due to the fourth contour of the fourth coupling section 14, when the battery pack 10 is installed in the first battery slot 20 along the direction of z-axis, the protrusion 221 of the second coupling section 22 reaches into the recess 143 such that the second coupling section 22 engages with the fourth coupling section 14. Meanwhile, the first arm 141 and the second arm 142 of the fourth coupling section 14 abut against both sides of the protrusion 221 of the second coupling section 22 along the direction of y-axis so as to restrain the movement of the battery pack 10 along the direction of y-axis with regard to the first battery slot 20. In other words, the battery pack 10 will not drop out of the first battery slot 20 along the direction of y-axis.

In the aforesaid embodiment, in order to avoid that the battery pack 10 is falsely installed in the first battery slot 20 with reverse side (that is the battery pack 10 is rotated relative to the z-axis) such that the electrical contacts 12 of the battery pack 10 cannot correctly couple to the pogo pins 23 of the first battery slot 20, in this embodiment of the present invention, at least one coupling section of the coupling section 13, 14 of the battery pack 10 can engage with the corresponding coupling section of the first battery slot 20 only, and it cannot engage with the other coupling section of the first battery slot 20. Accordingly, when the battery pack 10 is assembled without obeying the aforesaid corresponding manner, the assembly will fail whereby it can avoid mis-plugging of the battery pack 10. To achieve such purpose, the first contour of the first coupling section 21 (as well as the corresponding third contour of the third coupling section 13) and the second contour of the second coupling section 22 (as well as the corresponding fourth contour of the fourth coupling section 14) are different in shapes, such that the third contour of the third coupling section 13, for example, the rectangular-shaped contour of the recess 133 in this embodiment, is different from the second contour of the second coupling section 22, for example, the T-shaped contour of the protrusion 221 in this embodiment. By doing so, if the battery pack 10 is to be installed with reverse side, with the third coupling section 13 aiming at the second coupling section 22 and the fourth coupling section 14 aiming at the first coupling section 21, the protrusion 221 is not allowed to reach into the recess 133 and the battery pack 10 will not be installed therein properly. It should be also noticed that the aforesaid recess 133 and recess 143 are two recesses arranged oppositely at the sides of the battery pack 10 and having asymmetric contours.

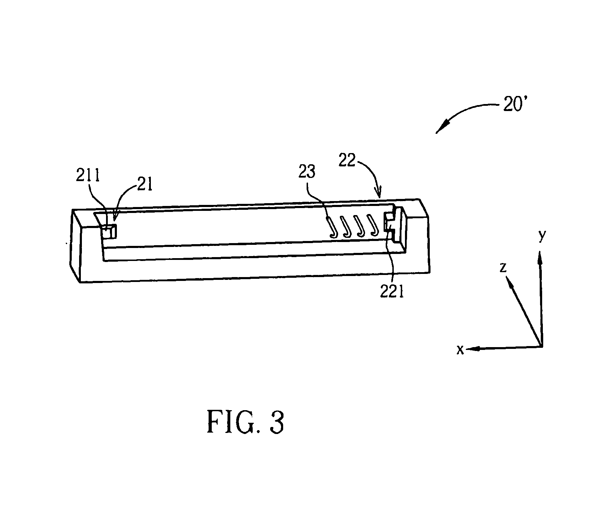

Since the electrical contacts 12 of the battery pack 10 are located at the right portion of the side surface 11 in the first embodiment as shown in FIG. 1, a handheld device having the first battery slot 20 as shown in FIG. 2, whose pogo pins 23 are located at the left portion, is ready for the battery pack 10 to be installed in a manner as shown in FIG. 1. For another battery slot with the pogo pins being located at the right portion, such as the second battery slot 20' of another handheld device as shown in FIG. 3, the battery pack 10 of the present invention of the first embodiment can be installed in the second battery slot 20' in a reverse manner by rotating along the direction of z-axis, wherein the coupling sections of the battery pack 10 also correspond to the coupling sections of the second battery slot 20', too. The reversed battery pack 10 can be securely installed in the second battery slot 20' and will not drop out along the direction of y-axis in the second battery slot 20'. The battery pack 10 described in the first embodiment of the present invention effectively solves the problem that a conventional battery pack can only be applied for one handheld device. The battery pack 10 can be installed in a second handheld device after rotation. Not only the types of the battery packs and cost for manufacturing the battery packs can be reduced but also the development of new devices is enhanced.

Additionally, in the first embodiment, the third coupling section 13 (as well as the corresponding first coupling section 21 of the first battery slot 20) and the fourth coupling section 14 (as well as the corresponding second coupling section 22 of the first battery slot 20) preferably have symmetric structures with regard to a central axis L₁L₂ located on the side surface 11 of the battery pack 10. In this embodiment, the direction of the central axis L₁L₂ is the same direction as the x-axis, and the x-axis, the aforesaid y-axis and z-axis are perpendicular to one another.

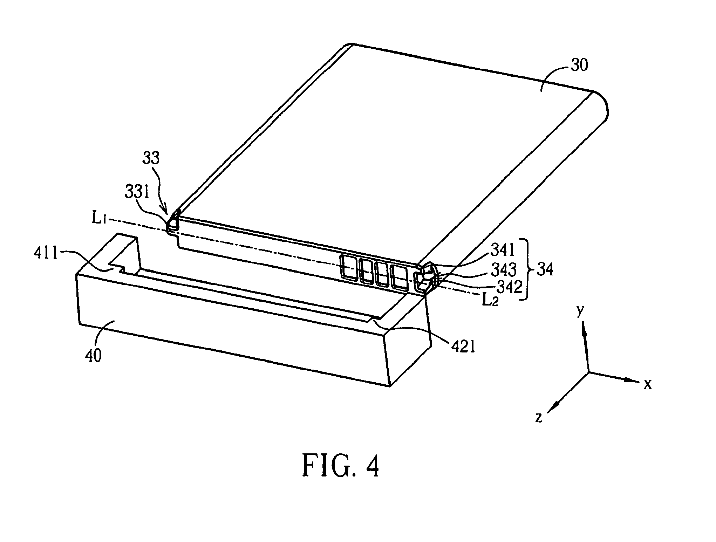

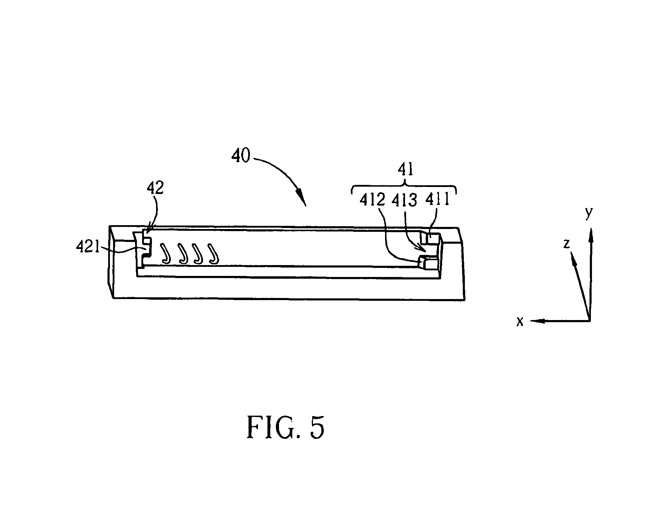

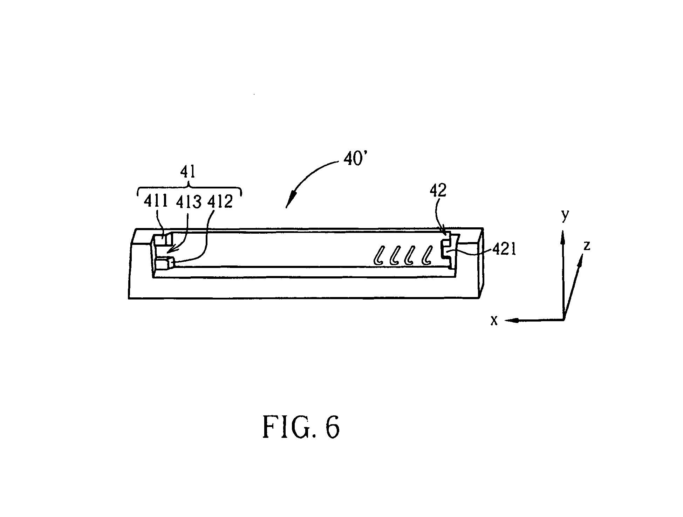

Please refer to FIG. 4 and FIG. 5. FIG. 4 is a schematic diagram of a battery pack 30 and a first battery slot 40 of a battery pack system according to a second embodiment of the present invention. FIG. 5 is a partial diagram in another view of the first battery slot 40 of the battery pack system according to the second embodiment. In the second embodiment of the present invention, a third coupling section 33 of the battery pack 30 includes a protrusion 331. A fourth coupling section 34, similar to the fourth coupling section 14 in the first embodiment, includes a first arm 341, a recess 343, and a second arm 342 arranged along a direction of y-axis. A first coupling section 41 of the first battery slot 40 includes a third arm 411, a recess 413, and a fourth arm 412 arranged along the direction of y-axis. A second coupling section 42 includes a protrusion 421 utilized for engaging with the recess 343 of the fourth coupling section 34. Since the third coupling section 33 and the fourth coupling section 34 of the battery pack 30 respectively engage with the first coupling section 41 and the second coupling section 42 of the first battery slot 40 in the second embodiment, the battery pack 30 can be installed in the first battery slot 40 and will not drop off. Furthermore, the third coupling section 33 and the fourth coupling section 34 are not allowed to engage with the second coupling section 42 and the first coupling section 41 of the first battery slot 40 respectively after rotation. Accordingly, it can prevent the possibility that the battery pack 30 is falsely installed in the first battery slot 40. Installation and engaging relation between the battery pack 30 and the first battery slot 40 in the second embodiment are similar to those mentioned in the first embodiment. Additionally, the battery pack 30 can be reversely used to be installed in a battery slot of a second handheld device after rotation. Accordingly, it can enhance convenience of the battery pack 30 in practical application. For another battery slot with the pogo pins being located at the right portion, such as a second battery slot 40' of another handheld device as shown in FIG. 6, the battery pack 30 in the second embodiment can be installed in the second battery slot 40' in a reverse manner after rotating along the direction of z-axis, wherein the coupling sections of the battery pack 30 also correspond to the coupling sections of the second battery slot 40', too. The reversed battery pack 30 can be securely installed in the second battery slot 40' and will not drop out along the direction of y-axis in the battery slot 40'.

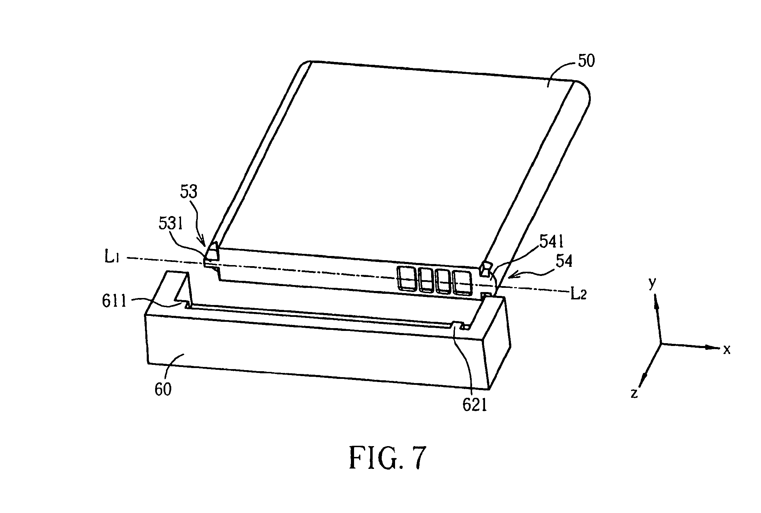

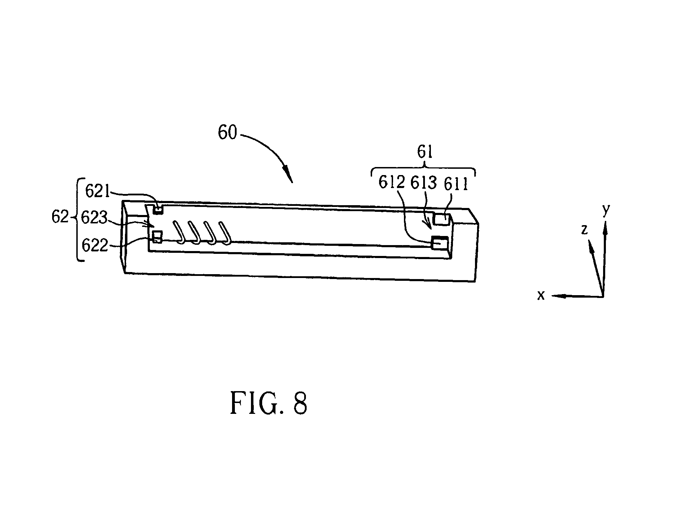

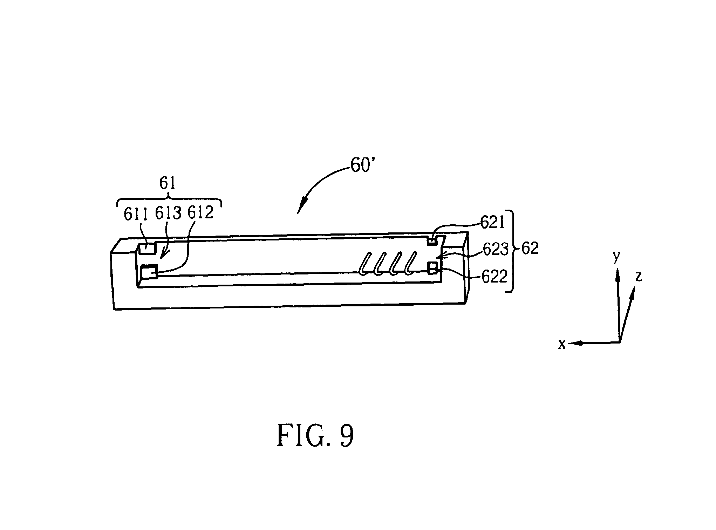

Please refer to FIG. 7 and FIG. 8. FIG. 7 is a schematic diagram of a battery pack 50 and a first battery slot 60 of a battery pack system according to a third embodiment of the present invention. FIG. 8 is a partial diagram in another view of the first battery slot 60 of the battery pack system according to the third embodiment. In the third embodiment of the present invention, a third coupling section 53 of the battery pack 50 includes a protrusion 531 and a fourth coupling section 54 includes a protrusion 541. A first coupling section 61 of the first battery slot 60 includes a third arm 611, a recess 613, and a fourth arm 612 arranged along a direction of y-axis. A second coupling section 62 includes a third arm 621, a recess 623, and a fourth arm 622 arranged along the direction of y-axis. The first coupling section 61 of the first battery slot 60 engages with the third coupling section 53 of the battery pack 50, and the second coupling section 62 engages with the fourth coupling section 54. Accordingly, the battery pack 50 can be installed in the first battery slot 60 and will not drop off. Additionally, due to the difference of contours between the third coupling section 53 and the fourth coupling section 54, the battery pack 50 cannot engage with the second coupling section 62 and the first coupling section 61 of the first battery slot 60 after rotation. Accordingly, it can prevent the possibility that the battery pack 50 is falsely installed in the first battery slot 60. Installation and engaging relation between the battery pack 50 and the first battery slot 60 in the third embodiment are similar to those mentioned in the first and second embodiment. Additionally, the battery pack 50 can be reversely used to be installed in the battery slot of second handheld device after rotation. Accordingly, it can enhance convenience of the battery pack 50 in practical application. For another battery slot with the pogo pins being located at the right portion, such as a second battery slot 60' of another handheld device as shown in FIG. 9, the battery pack 50 in the third embodiment can be installed in the second battery slot 60' in a reverse manner after rotating along the direction of z-axis, wherein the coupling sections of the battery pack 50 also correspond to the coupling sections of the second battery slot 60', too. The reversed battery pack 50 can be securely installed in the second battery slot 60' and will not drop out along the direction of y-axis in the second battery slot 60'.

The battery pack system of the subject application includes a battery pack having two coupling sections configured at the side surface in the face of the battery slot of the handheld device, where the coupling sections correspond to coupling structure of the battery slots. As the battery pack is installed in the first battery slot, the coupling sections engage with the coupling structure respectively for keeping the battery pack from detaching out of the first battery slot. The battery pack may also have an upturned position to be installed in a second battery slot of another handheld device, where the coupling sections also correspond to and engage with coupling structure of the second battery slot and keep the battery pack from detaching out of the second battery slot.

## Claims

1. A battery pack system, comprising:
a battery pack (10, 30, 50);
a first battery slot (20, 40, 60) of a first handheld device; and
a second battery slot (20', 40', 60') of a second handheld device;
said battery pack (10, 30, 50) being adapted to be installed in said first battery slot (20, 40, 60) or for being rotated along a first direction to be installed in said second battery slot (20', 40', 60') and for providing power for the first handheld device or the second handheld device,
the first battery slot (20, 40, 60) having a first coupling section (21, 41, 61) and a second coupling section (22, 42, 62),
the second battery slot (20', 40', 60') having a fifth coupling section (22, 42, 62) and a sixth coupling section (21, 41, 61), the first coupling section (21, 41, 61) and the sixth coupling section (21, 41, 61) having a first contour respectively, the second coupling section (22, 42, 62) and the fifth coupling section (22, 42, 62) having a second contour respectively,
the battery pack (10, 30, 50) comprising:
a side surface (11);
a third coupling section (13, 33, 53) disposed on the side surface (11) and having a third contour corresponding to the first contour and engaging with the first coupling section (21, 41, 61) or the sixth coupling section (21, 41 , 61) along the first direction so as to restrain movement of the battery pack (1 0, 30, 50) along a second direction in the first battery slot (20, 40, 60) or in the second battery slot (20', 40', 60'); and
a fourth coupling section (14, 34, 54) disposed on the side surface (11) and having a fourth contour corresponding to the second contour and engaging with the second coupling section (22, 42, 62) or the fifth coupling section (22, 42, 62) along the first direction so as to restrain movement of the battery pack (10, 30, 50) along the second direction in the first battery slot (20, 40, 60) or in the second battery slot (20', 40', 60');
wherein the third contour is different from the second contour such that the third coupling section (13, 33, 53) is blocked by the second coupling section (22, 42, 62) along the first direction and can not engage with the second coupling section (22, 42, 62), and the first battery slot (20, 40, 60) has a mirror mapping contour corresponding to the second battery slot (20', 40', 60') with regard to the first direction.

2. The battery pack system of claim 1, **characterised in that** each of the first coupling section (21) and the sixth coupling section (21) comprises a protrusion (211) having the first contour, the third coupling section (13) comprises a first arm (131), a recess (1 33), and a second arm (132), the recess (133) which is formed between the first arm (131) and the second arm (132) has the third contour, the first arm (131), the recess (133), and the second arm (132) are arranged along the second direction, and the protrusion (211) reaches into the recess (133) and the first arm (131) and the second arm (132) abut against both sides of the protrusion (21 1) when the third coupling section (13) engages with the first coupling section (21) or the sixth coupling section (21).

3. The battery pack system of claim 1, **characterised in that** the third coupling section (33, 53) comprises a protrusion (331, 531) having the third contour, each of the first coupling section (41, 61) and the sixth coupling section (41, 61) comprises a third arm (411, 611), a recess (413, 613), and a fourth arm (412, 612), the recess (413, 613) which is formed between the third arm (411, 611) and the fourth arm (412, 612) has the first contour, the third arm (411, 611), the recess (413, 613), and the fourth arm (412, 612) are arranged along the second direction, and the protrusion (331, 531) reaches into the recess (413, 613) along the first direction and is clamped by the third arm (411, 611) and the fourth arm (412, 612) when the third coupling section (33, 53) engages with the first coupling section (41, 61) or the sixth coupling section (41, 61).

4. The battery pack system of claim 1, **characterised in that** each of the second coupling section (22, 42) and the fifth coupling section (22, 42) comprises a protrusion (221, 421) having the second contour, the fourth coupling section (14, 34) comprises a first arm (141, 341), a recess (143, 343), and a second arm (142, 342), the recess (143, 343) which is formed between the first arm (141, 341) and the second arm (142, 342) has the fourth contour, the first arm (141, 341), the recess (143, 343), and the second arm (142, 342) are arranged along the second direction, and the protrusion (221, 421) reaches into the recess (143, 343) and the first arm (141, 341) and the second arm (142, 342) abut against both sides of the protrusion (221, 421) when the fourth coupling section (14, 34) engages with the second coupling section (22, 42) or the fifth coupling section (22, 42).

5. The battery pack system of claim 1, **characterised in that** the fourth coupling section (54) comprises a protrusion (541) having the fourth contour, each of the second coupling section (62) and the fifth coupling section (62) comprises a third arm (621), a recess (623), and a fourth arm (622), the recess (623) which is formed between the third arm (621) and the fourth arm (622) has the second contour, the third arm (621), the recess (623), and the fourth arm (622) are arranged along the second direction, and the protrusion (541) reaches into the recess (623) along the first direction and is clamped by the third arm (621) and the fourth arm (622) when the fourth coupling section (54) engages with the second coupling section (62) or the fifth coupling section (62).

6. The battery pack system of claim 1, **characterised in that** each of the third coupling section (13, 33, 53) and the fourth coupling section (14, 34, 54) comprises a symmetric structure relative to a central axis located on the side surface (11) and perpendicular to the second direction.

7. The battery pack system of claim 1, **characterised by** at least one electrical contact (12) disposed on the side surface (11), each of the first battery slot (20, 40, 60) and the second battery slot (20', 40', 60') having at least one pogo pin (23), the electrical contact (12) electrically connected to the pogo pin (23) of the first battery slot (20, 40, 60) or that of the second battery slot (20', 40', 60') to provide the first handheld device or the second handheld device with a power supply when the battery pack (10, 30, 50) is installed in the first battery slot (20, 40, 60) or the second battery slot (20', 40', 60').

8. The battery pack system of claim 1, **characterised in that** the first direction and the second direction are perpendicular to each other.

## Patentansprüche

1. Batterie- bzw. Akkusystem, das Folgendes aufweist:
eine Batterie bzw. einen Akku (10, 30, 50);
einen ersten Batterie- bzw. Akkusteckplatz (20, 40, 60) einer ersten handgehaltenen Vorrichtung; und
einen zweiten Akkusteckplatz (20', 40', 60') einer zweiten handgehaltenen Vorrichtung;
wobei der Akku (10, 30, 50) angepasst ist, um in dem ersten Akkusteckplatz (20, 40, 60) angeordnet zu werden oder um entlang einer ersten Richtung gedreht zu werden, um in dem Akkusteckplatz (20', 40', 60') angeordnet zu werden und um Leistung für die erste handgehaltene Vorrichtung oder die zweite handgehaltene Vorrichtung zu liefern,
wobei der erste Akkusteckplatz (20, 40, 60) einen ersten Kopplungsabschnitt (21, 41, 61) und einen zweiten Kopplungsabschnitt (22, 42, 62) besitzt,
wobei der zweite Akkusteckplatz (20', 40', 60') einen fünften Kopplungsabschnitt (22, 42, 62) und einen sechsten Kopplungsabschnitt (21, 41, 61) besitzt, wobei der erste Kopplungsabschnitt (21, 41, 61) und der sechste Kopplungsabschnitt (21, 41, 61) jeweils eine erste Kontur besitzen und der zweite Kopplungsabschnitt (22, 42, 62) und der fünfte Kopplungsabschnitt (22, 42, 62) jeweils eine zweite Kontur besitzen,
wobei der Akku (10, 30, 50) Folgendes aufweist:
eine Seitenoberfläche (11);
einen dritten Kopplungsabschnitt (13, 33, 53), der auf der Seitenoberfläche (11) angeordnet ist und eine dritte Kontur besitzt, die der ersten Kontur entspricht und in Eingriff mit dem ersten Kopplungsabschnitt (21, 41, 61) oder
dem sechsten Kopplungsabschnitt (21, 41, 61) entlang der ersten Richtung steht, um eine Bewegung des Akku (10, 30, 50) entlang einer zweiten Richtung in dem ersten Akkusteckplatz (20, 40, 60) oder in dem zweiten Akkusteckplatz (20', 40', 60') zu beschränken; und
einen vierten Kopplungsabschnitt (14, 34, 54), der auf der Seitenoberfläche (11) angeordnet ist und eine vierte Kontur besitzt, die der zweiten Kontur entspricht und in Eingriff mit dem zweiten Kopplungsabschnitt (22, 42, 62) oder dem fünften Kopplungsabschnitt (22, 42, 62) entlang der ersten Richtung steht, um die Bewegung des Akku (10, 30, 50) entlang der zweiten Richtung in dem ersten Akkusteckplatz (20, 40, 60) oder in dem zweiten Akkusteckplatz (20', 40', 60') zu beschränken;
wobei sich die dritte Kontur von der zweiten Kontur so unterscheidet, dass der dritte Kopplungsabschnitt (13, 33, 53) durch den zweiten Kopplungsabschnitt (22, 42, 62) entlang der ersten Richtung blockiert wird und nicht in Eingriff mit dem zweiten Kopplungsabschnitt (22, 42, 62) kommen kann, und der erste Akkusteckplatz (20, 40, 60) eine spiegelbildlich passende Kontur entsprechend dem zweiten Akkusteckplatz (20', 40', 60') in Bezug auf die erste Richtung besitzt.

2. Akkusystem gemäß Anspruch 1, **dadurch gekennzeichnet, dass** sowohl der erste Kopplungsabschnitt (21) als auch der sechste Kopplungsabschnitt (21) einen Vorsprung (211) mit der ersten Kontur aufweisen, der dritte Kopplungsabschnitt (13) einen ersten Arm (131), eine Ausnehmung (133) und einen zweiten Arm (132) aufweist, wobei die Ausnehmung (133), die zwischen dem ersten Arm (131) und dem zweiten Arm (132) gebildet ist, die dritte Kontur besitzt, der erste Arm (131), die Ausnehmung (133) und der zweite Arm (132) entlang der zweiten Richtung angeordnet sind, und der Vorsprung (211) in die Ausnehmung (133) reicht und der erste Arm (131) und der zweite Arm (132) gegen beide Seiten des Vorsprungs (211) anstoßen, wenn sich der dritte Kopplungsabschnitt (13) in Eingriff mit dem ersten Kopplungsabschnitt (21) oder dem sechsten Kopplungsabschnitt (21) befindet.

3. Akkusystem gemäß Anspruch 1, **dadurch gekennzeichnet, dass** der dritte Kopplungsabschnitt (33, 53) einen Vorsprung (331, 531) mit der dritten Kontur besitzt, sowohl der erste Kopplungsabschnitt (41, 61) als auch der sechste Kopplungsabschnitt (41, 61) einen dritten Arm (411, 611), eine Ausnehmung (413, 613) und einen vierten Arm (412, 612) aufweisen, die Ausnehmung (413, 613), die zwischen dem dritten Arm (411, 611) und dem vierten Arm (412, 612) gebildet ist, die erste Kontur besitzt, der dritte Arm (411, 611), die Ausnehmung (413, 613) und der vierte Arm (412, 612) entlang der zweiten Richtung angeordnet sind, und der Vorsprung (331, 531) in die Ausnehmung (413, 613) entlang der ersten Richtung reicht und durch den dritten Arm (411, 611) und den vierten Arm (412, 612) eingeklemmt wird, wenn sich der dritte Kopplungsabschnitt (33, 53) in Eingriff mit dem ersten Kopplungsabschnitt (41, 61) oder dem sechsten Kopplungsabschnitt (41, 61) befindet.

4. Akkusystem gemäß Anspruch 1, **dadurch gekennzeichnet, dass** sowohl der zweite Kopplungsabschnitt (22, 42) als auch der fünfte Kopplungsabschnitt (22, 42) einen Vorsprung (221, 421) mit der zweiten Kontur aufweisen, der vierte Kopplungsabschnitt (14, 34) einen ersten Arm (141, 341), eine Ausnehmung (143, 343) und einen zweiten Arm (142, 342) aufweist, die Ausnehmung (143, 343), die zwischen dem ersten arm (141, 341) und dem zweiten Arm (142, 342) gebildet ist, die vierte Kontur besitzt, der erste Arm (141, 341), die Ausnehmung (143, 343) und der zweite Arm (142, 342) entlang der zweiten Richtung ausgerichtet sind, und der Vorsprung (221, 421) in die Ausnehmung (143, 343) reicht und der erste Arm (141, 341) und der zweite Arm (221, 421) aneinanderstoßen, wenn sich der vierte Kopplungsabschnitt (14, 34) und der zweite Kopplungsabschnitt (22, 42) oder der fünfte Kopplungsabschnitt (22, 42) in Eingriff befinden.

5. Akkusystem gemäß Anspruch 1, **dadurch gekennzeichnet, dass** der vierte Kopplungsabschnitt (54) einen Vorsprung (541) mit der vierten Kontur aufweist, wobei der zweite Kopplungsabschnitt (62) und der fünfte Kopplungsabschnitt (62) einen dritten Arm (621), eine Ausnehmung (623) und einen vierten Arm (622) aufweisen, die Ausnehmung (623), die zwischen dem dritten Arm (621) und dem vierten Arm (622) gebildet ist, die zweite Kontur besitzt, der dritte Arm (621), die Ausnehmung (623) und der vierte Arm (622) entlang der zweiten Richtung ausgerichtet sind, und der Vorsprung (541) in die Ausnehmung (623) entlang der ersten Richtung reicht und durch den dritten Arm (621) und den vierten Arm (622) eingeklemmt wird, wenn sich der vierte Kopplungsabschnitt (54) in Eingriff mit dem zweiten Kopplungsabschnitt (62) oder dem fünften Kopplungsabschnitt (62) befindet.

6. Akkusystem gemäß Anspruch 1, **dadurch gekennzeichnet, dass** sowohl der dritte Kopplungsabschnitt (13, 33, 53) als auch der vierte Kopplungsabschnitt (14, 34, 54) einen symmetrischen Aufbau relativ zu einer Mittelachse aufweisen, die auf der Seitenoberfläche (11) und senkrecht zu der zweiten Richtung gelegen ist.

7. Akkusystem gemäß Anspruch 1, **dadurch gekennzeichnet, dass** zumindest ein elektrischer Kontakt (12) auf der Seitenoberfläche (11) angeordnet ist, sowohl der erste Akkusteckplatz (20, 40. 60) als auch der zweite Akkusteckplatz (20', 40', 60') zumindest einen Springstift (23) besitzen, der elektrische Kontakt (12) elektrisch mit dem Springstift (23) des ersten Akkusteckplatzes (20, 40. 60) verbunden ist oder dem des zweiten Akkusteckplatzes (20', 40', 60'), um die erste handgehaltene Vorrichtung oder die zweite handgehaltene Vorrichtung mit einer Leistungsversorgung zu versehen, wenn der Akku (10, 30, 50) in dem ersten Akkusteckplatz (20, 40, 60) oder dem zweiten Akkusteckplatz (20', 40', 60') installiert ist.

8. Akkusystem gemäß Anspruch 1, **dadurch gekennzeichnet, dass** die erste Richtung und die zweite Richtung senkrecht zueinander sind.

## Revendications

1. Système de bloc de batterie, comprenant :
un bloc de batterie (10, 30, 50) ;
un premier logement de batterie (20, 40, 60) d'un premier dispositif portable ; et
un deuxième logement de batterie (20', 40', 60') d'un deuxième dispositif portable ;
le bloc de batterie (10, 30, 50) étant adapté pour être installé dans le premier logement de batterie (20, 40, 60) ou pour être tourné suivant une première direction pour être installé dans le deuxième logement de batterie (20', 40', 60') et pour fournir une alimentation pour le premier dispositif portable ou le deuxième dispositif portable,
le premier logement de batterie (20, 40, 60) comportant une première section de couplage (21, 41, 61) et une deuxième section de couplage (22, 42, 62),
le deuxième logement de batterie (20', 40', 60') comportant une cinquième section de couplage (22, 42, 62) et une sixième section de couplage (21, 41, 61), la première section de couplage (21, 41, 61) et la sixième section de couplage (21, 41, 61) ayant respectivement un premier profil, la deuxième section de couplage (22, 42, 62) et la cinquième section de couplage (22, 42, 62) ayant respectivement un deuxième profil,
le bloc de batterie (10, 30, 50) comprenant :
une surface latérale (11) ;
une troisième section de couplage (13, 33, 53) disposée sur la surface latérale (11) et ayant un troisième profil correspondant au premier profil et s'engageant avec la première section de couplage (21, 41, 61) ou la sixième section de couplage (21, 41, 61) suivant la première direction de façon à limiter le mouvement du bloc de batterie (10, 30, 50) suivant une deuxième direction dans le premier logement de batterie (20, 40, 60) ou dans le deuxième logement de batterie (20', 40', 60') ; et
une quatrième section de couplage (14, 34, 54) disposée sur la surface latérale (11) et ayant un quatrième profil correspondant au deuxième profil et s'engageant avec la deuxième section de couplage (22, 42, 62) ou la cinquième section de couplage (22, 42, 62) suivant la première direction de façon à limiter le mouvement du bloc de batterie (10, 30, 50) suivant la deuxième direction dans le premier logement de batterie (20, 40, 60) ou dans le deuxième logement de batterie (20', 40', 60') ;
dans lequel le troisième profil est différent du deuxième profil de sorte que la troisième section de couplage (13, 33, 53) est bloquée par la deuxième section de couplage (22, 42, 62) suivant la première direction et ne peut pas s'engager avec la deuxième section de couplage (22, 42, 62), et le premier logement de batterie (20, 40, 60) a un profil symétrique correspondant au deuxième logement de batterie (20', 40', 60') en ce qui concerne la première direction.

2. Système de bloc de batterie selon la revendication 1, **caractérisé en ce que** chacune de la première section de couplage (21) et de la sixième section de couplage (21) comporte une protubérance (211) ayant le premier profil, la troisième section de couplage (13) comprend un premier bras (131), un renfoncement (133) et un deuxième bras (132), le renfoncement (133) qui est formé entre le premier bras (131) et le deuxième bras (132) a le troisième profil, le premier bras (131), le renfoncement (133) et le deuxième bras (132) sont agencés suivant la deuxième direction, et la protubérance (211) atteint le renfoncement (133) et le premier bras (131) et le deuxième bras (132) butent contre les deux côtés de la protubérance (211) lorsque la troisième section de couplage (13) s'engage avec la première section de couplage (21) ou la sixième section de couplage (21).

3. Système de bloc de batterie selon la revendication 1, **caractérisé en ce que** la troisième section de couplage (33, 53) comprend une protubérance (331, 531) ayant le troisième profil, chacune de la première section de couplage (41, 61) et de la sixième section de couplage (41, 61) comprend un troisième bras (411, 611), un renfoncement (413, 613) et un quatrième bras (412, 612), le renfoncement (413, 613) qui est formé entre le troisième bras (411, 611) et le quatrième bras (412, 612) a le premier profil, le troisième bras (411, 611), le renfoncement (413, 613) et le quatrième bras (412, 612) sont agencés suivant la deuxième direction, et la protubérance (331, 531) atteint le renfoncement (413, 613) suivant la première direction et est bridée par le troisième bras (411, 611) et le quatrième bras (412, 612) lorsque la troisième section de couplage (33, 53) s'engage avec la première section de couplage (41, 61) ou la sixième section de couplage (41, 61).

4. Système de bloc de batterie selon la revendication 1, **caractérisé en ce que** chacune de la deuxième section de couplage (22, 42) et de la cinquième section de couplage (22, 42) comprend une protubérance (221, 421) ayant le deuxième profil, la quatrième section de couplage (14, 34) comprend un premier bras (141, 341), un renfoncement (143, 343) et un deuxième bras (142, 342), le renfoncement (143, 343) qui est formé entre le premier bras (141, 341) et le deuxième bras (142, 342) a le quatrième profil, le premier bras (141, 341), le renfoncement (143, 343) et le deuxième bras (142, 342) sont agencés suivant la deuxième direction, et la protubérance (221, 421) atteint le renfoncement (143, 343) et le premier bras (141, 341) et le deuxième bras (142, 342) butent contre les deux côtés de la protubérance (221, 421) lorsque la quatrième section de couplage (14, 34) s'engage avec la deuxième section de couplage (22, 42) ou la cinquième section de couplage (22, 42).

5. Système de bloc de batterie selon la revendication 1, **caractérisé en ce que** la quatrième section de couplage (54) comprend une protubérance (541) ayant le quatrième profil, chacune de la deuxième section de couplage (62) et de la cinquième section de couplage (62) comprend un troisième bras (621), un renfoncement (623) et un quatrième bras (622), le renfoncement (623) qui est formé entre le troisième bras (621) et le quatrième bras (622) a le deuxième profil, le troisième bras (621), le renfoncement (623) et le quatrième bras (622) sont agencés suivant la deuxième direction, et la protubérance (541) atteint le renfoncement (623) suivant la première direction et est bridée par le troisième bras (621) et le quatrième bras (622) lorsque la quatrième section de couplage (54) s'engage avec la deuxième section de couplage (62) ou la cinquième section de couplage (62).

6. Système de bloc de batterie selon la revendication 1, **caractérisé en ce que** chacune de la troisième section de couplage (13, 33, 53) et de la quatrième section de couplage (14, 34, 54) a une structure symétrique par rapport à un axe central situé sur la surface latérale (11) et perpendiculaire à la deuxième direction.

7. Système de bloc de batterie selon la revendication 1, **caractérisé par** au moins un contact électrique (12) disposé sur la surface latérale (11), chacun du premier logement de batterie (20, 40, 60) et du deuxième logement de batterie (20', 40', 60') comportant au moins une broche à ressort (23), le contact électrique (12) étant connecté électriquement à la broche à ressort (23) du premier logement de batterie (20, 40, 60) ou à celle du deuxième logement de batterie (20', 40', 60') pour fournir au premier dispositif portable ou au deuxième dispositif portable une alimentation lorsque le bloc de batterie (10, 30, 50) est installé dans le premier logement de batterie (20, 40, 60) ou le deuxième logement de batterie (20', 40', 60').

8. Système de bloc de batterie selon la revendication 1, **caractérisé en ce que** la première direction et la deuxième direction sont perpendiculaires entre elles.
